# EUROPEAN PATENT APPLICATION

(11) **EP 4 407 736 A1**
(43) Date of publication of application: **31.07.2024**
(21) Application number: 23857668.0
(22) Date of filing: 21.08.2023
(51) Int. Cl.: H01M 10/058, H01M 10/0583, H01M 10/44, H01M 10/052, H01M 4/04

(54) **METHOD FOR ACTIVATING LITHIUM SECONDARY BATTERY**

(30) Priority: 23.08.2022 KR 20220105424; 17.08.2023 KR 20230107553
(71) Applicant: LG Energy Solution, Ltd., Seoul 07335 (KR)
(72) Inventor: LEE, Han Jin, Daejeon 34122 (KR); YEO, Chang Sin, Daejeon 34122 (KR); CHOI, Young Sang, Daejeon 34122 (KR); JEONG, Yeon Woo, Daejeon 34122 (KR); HAM, Seok Won, Daejeon 34122 (KR); JANG, Min Young, Daejeon 34122 (KR)
(74) Representative: Goddar, Heinz J.
(86) International application number: PCT/KR2023/012325
(87) International publication number: WO 2024/043636

(57) **Abstract**

An activation method of a lithium secondary battery according to the present invention includes: (a) preparing a preliminary lithium secondary battery in which the electrode assembly including a positive electrode, negative electrode, and separator, is housed in a battery case with an electrolyte; (b) initial charging of charging the preliminary lithium secondary battery until it reaches a predetermined voltage; (c) degassing process, which removes the gases inside the preliminary lithium secondary battery generated during the initial charging and seals; and (d) aging process for aging the preliminary lithium secondary battery, wherein the processes (a) to (d) are performed sequentially.

## Description

### [Technical Field]

This application claims the benefit of priority to Korean Patent Application No. 10-2022-0105424, filed on August 23, 2022, and Korean Patent Application No. 10-2023-0107553, filed on August 17, 2023.

The present invention relates to an activation method of a lithium secondary battery.

### [Background Technology of the Invention]

In general, as the price of energy sources increases due to the depletion of fossil fuels, environmental pollution is becoming a growing concern, and the need for eco-friendly alternative energy sources is becoming an indispensable factor for future life. Therefore, research on various power generation technologies such as nuclear power, solar power, wind power, and tidal power is continuing, and power storage devices for more efficient use of such energy are also receiving significant attention.

In particular, the demand for batteries as an energy source is increasing rapidly with the development of technology and the increasing demand for mobile devices, and as a result, a lot of research is being conducted on batteries that can meet various needs.

In terms of battery shape, there is a high demand for prismatic secondary batteries and pouch-type secondary batteries, which can be applied to products such as mobile phones due to their thinness, and in terms of materials, there is a high demand for lithium secondary batteries such as lithium-ion batteries and lithium-ion polymer batteries, which have advantages such as high energy density, discharge voltage, and output stability.

In addition, secondary batteries are classified according to the structure of the electrode assembly in which the positive electrode, negative electrode, and a separator interposed between the positive electrode and negative electrode are stacked, such as a jelly-roll type electrode assembly in which a long sheet-type positive electrode and negative electrode are wound with a separator interposed, a stack-type (laminated) electrode assembly in which a plurality of positive electrodes and negative electrodes cut into units of a certain size are stacked sequentially with a separator interposed, and the like. Recently, in order to solve the problems of the jelly-roll type electrode assembly and the stack-type electrode assembly, a stack-folding type electrode assembly with an advanced structure, which is a mixture of the jelly-roll type and the stack-type, has been developed in which unit cells with a predetermined unit of positive electrodes and negative electrodes with a separator interposed between them are stacked on a separator film and are sequentially wound.

Meanwhile, due to the nature of secondary batteries, an activation process is essentially performed in the first cycle to activate the positive electrode active material and create a stable solid electrolyte interface (SEI) at the negative electrode, and conventionally, an initial charging process to charge the secondary battery to a predetermined voltage range, an aging process to stabilize the SEI film formed by the initial charging, and a degassing process are performed in sequence. The degassing process is the process of discharging the large amount of gas generated inside the secondary battery by these activation processes to the outside of the secondary battery.

If the gas generated inside the battery cell during the activation process is not efficiently removed as described above, the gas will occupy a certain space inside the battery cell, causing the central part of the battery case to swell and cause deformation of the battery, and the internal gas will cause uncharged areas, which will adversely affect the battery performance such as lithium precipitation, capacity and power output, and battery life.

In particular, due to the structure of stack-folding type electrode assemblies, internal gases generated during the activation process are trapped in the bending portion of the separator, so the conventional activation process does not provide a sufficient gas discharge.

In addition, in order to form an SEI film on the negative electrode, conventional activation process typically performs a so-called jig formation in which the secondary battery is pressurized with a pressurization jig during initial charging to a predetermined voltage range in order to uniformly form the SEI film and prevent gases generated during initial charging from being trapped in the electrode assembly, which is known to reduce the risk of lithium precipitation. However, depending on the specifications of the secondary battery, it may not be possible to perform a jig formation that pressurizes the battery during the initial charging. Therefore, there is a need to develop technologies for activation methods that can reduce the risk of lithium precipitation in the absence of jig formation.

### [Description of the Invention]

### [Technical Problem]

The present invention seeks to provide an activation method that reduces the risk of lithium precipitation and is effective in removing gases generated during the activation process, for a lithium secondary battery with a stack-folding type electrode assembly and/or for a lithium secondary battery with a specification that the lithium secondary battery cannot be pressurized at the initial charging of the activation process.

### [Technical Solution]

An activation method of a lithium secondary battery according to the present invention includes: (a) preparing a preliminary lithium secondary battery in which the electrode assembly including a positive electrode, negative electrode, and separator, is housed in a battery case with an electrolyte; (b) initial charging of charging the preliminary lithium secondary battery until it reaches a predetermined voltage; (c) degassing process, which removes the gases inside the preliminary lithium secondary battery generated during the initial charging and seals; and (d) aging process for aging the preliminary lithium secondary battery, wherein the processes (a) to (d) above are performed sequentially.
In an exemplary embodiment of the present invention, the electrode assembly may be a stack-folding type electrode assembly.

In an exemplary embodiment of the present invention, the stack-folding type electrode assembly may have a structure in which a plurality of unit electrode assemblies are stacked, where a plurality of unit electrode assemblies having electrodes and separators alternately stacked thereon are folded one by one in a state of being disposed on a first surface of a separator sheet for folding.

In an exemplary embodiment of the present invention, the initial charging may not include pressurizing the lithium secondary battery.

In an exemplary embodiment of the present invention, the charge termination voltage of the initial charging may be set within a range of 30% to 80% (SOC 30% to SOC 80%), preferably within a range of 60% to 80% (SOC 60% to SOC 80%) of the design capacity of the secondary battery.

In an exemplary embodiment of the present invention, the preliminary lithium secondary battery may have an outer circumferential surface sealed by thermal fusion in a state in which an electrode assembly is housed in a battery case including a resin layer and a metal layer.

In an exemplary embodiment of the present invention, the aging process may include: (d-1) high temperature aging process of aging a preliminary lithium secondary battery at a temperature range of 50°C to 80°C, for a period of 10 hours to 40 hours.

In an exemplary embodiment of the present invention, the aging process may further include: (d-2) room temperature aging process of aging the preliminary lithium secondary battery at a temperature range of 18°C to 27°C, for a period of 24 hours to 80 hours.

In an exemplary embodiment of the present invention, (e) charging and discharging process to charge and discharge the preliminary lithium secondary battery may be further included after the aging process.

In an exemplary embodiment of the present invention, (f) roll-pressing the preliminary lithium secondary battery may be further included after the initial charging.

In an exemplary embodiment of the present invention, the preliminary lithium secondary battery may be roll-pressed at a linear pressure of 1 kgf/mm to 10 kgf/mm.

In an exemplary embodiment of the present invention, the roll-pressing process may be performed prior to the degassing process.

In an exemplary embodiment of the present invention, in the roll-pressing process, the preliminary lithium secondary battery may be roll-pressed in a direction parallel to the first direction, which is the withdrawal direction of an electrode lead.

In an exemplary embodiment of the present invention, the degassing process may be performed once.

In an exemplary embodiment of the present invention, the preparing of preliminary lithium secondary battery may include a pre-aging process of aging the preliminary lithium secondary battery for 12 hours to 48 hours to impregnate an electrolyte in the electrode assembly.

### [Advantageous Effects]

When the battery specifications do not allow for jig pressurization during initial charging, or when applied to stack-folding type electrode assemblies, it provides excellent gas discharging effect by minimizing the risk of lithium precipitation and removing internal gases immediately after the initial charging process, which is the most gas-generating part of the activation process, without compromising capacity and life characteristics compared to conventional activation methods.

### [Brief Description of the Drawings]

FIG. 1 is a flowchart of an activation method of a lithium secondary battery according to an exemplary embodiment of the present invention.
FIG. 2 is a mimetic diagram of a lithium secondary battery to which the activation method of the present invention is applied.
FIG. 3 is a flowchart of an activation method of a lithium secondary battery according to an exemplary embodiment of the present invention.
FIG. 4 is a flowchart of an activation method of a lithium secondary battery according to another exemplary embodiment of the present invention.
FIG. 5 is a perspective view of a pressurizing roller that may be used in the roll-pressing process of the present invention.
FIG. 6 is a top view of a pressurizing roller that may be used in the roll-pressing process of the present invention.
FIG. 7 is a schematic diagram of a stack-folding type electrode assembly.
FIG. 8 is a diagram schematically illustrating a pressurization method of the roll-pressing process of the present invention.

### [Best Mode for Carrying out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filing the present disclosure.

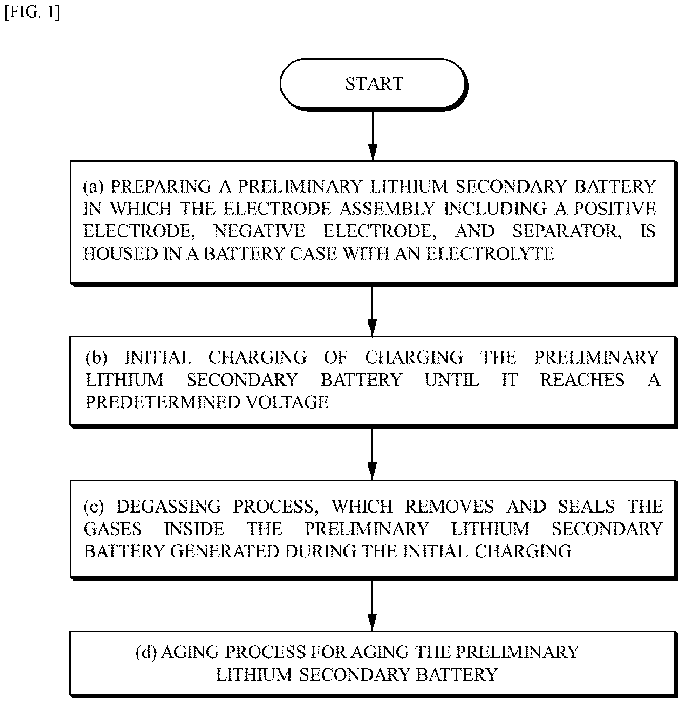

FIG. 1 is a flowchart of an activation method of a lithium secondary battery according to an exemplary embodiment of the present invention. Referring to FIG. 1, the activation method of the lithium secondary battery of the present invention includes: (a) preparing a preliminary lithium secondary battery in which the electrode assembly including a positive electrode, negative electrode, and separator, is housed in a battery case with an electrolyte; (b) initial charging of charging the preliminary lithium secondary battery until it reaches a predetermined voltage; (c) degassing process, which removes the gases inside the preliminary lithium secondary battery generated during the initial charging and seals; and (d) aging process for aging the preliminary lithium secondary battery, wherein the processes (a) to (d) are performed sequentially.

In a conventional activation method, an initial charging to charge a preliminary lithium battery to a predetermined voltage, an aging process to age the preliminary lithium secondary battery, and a degassing process to remove the gas inside the preliminary lithium secondary battery and to seal are typically performed in sequence. With respect to the preliminary lithium secondary battery, after the initial charging process, an SEI film is formed on the surface of the negative electrode, and in order to stabilize the SEI film formed, it is considered advantageous to perform the aging process immediately after the initial charging process, and since gas is generated during a series of activation processes including the aging process performed after the initial charging process, it has been a conventional technical practice to perform the degassing process after the aging process or after the cessation of the activation process.

The inventors of the present invention changed the order of the degassing process to after the initial charging process, noting that the amount of gas generated during the activation process of the secondary battery, which consists of several stages, is the highest during the initial charging process, and found that even the degassing process is performed before the aging process, there is no deterioration in the long-term cycle performance of the battery due to the instability of the SEI film formation, and that the degassing process can be performed before the electrolyte wet adhesion occurs between the separator and the electrode, resulting in a more excellent gas discharging effect.

The activation method of the present invention has the effect of preventing lithium precipitation and improving capacity and life characteristics, particularly when applied to lithium secondary batteries with stack-folding type electrode assemblies, where conventional activation methods do not provide sufficient internal gas discharge, and to lithium secondary batteries of models where the batteries cannot be pressurized during initial charging.

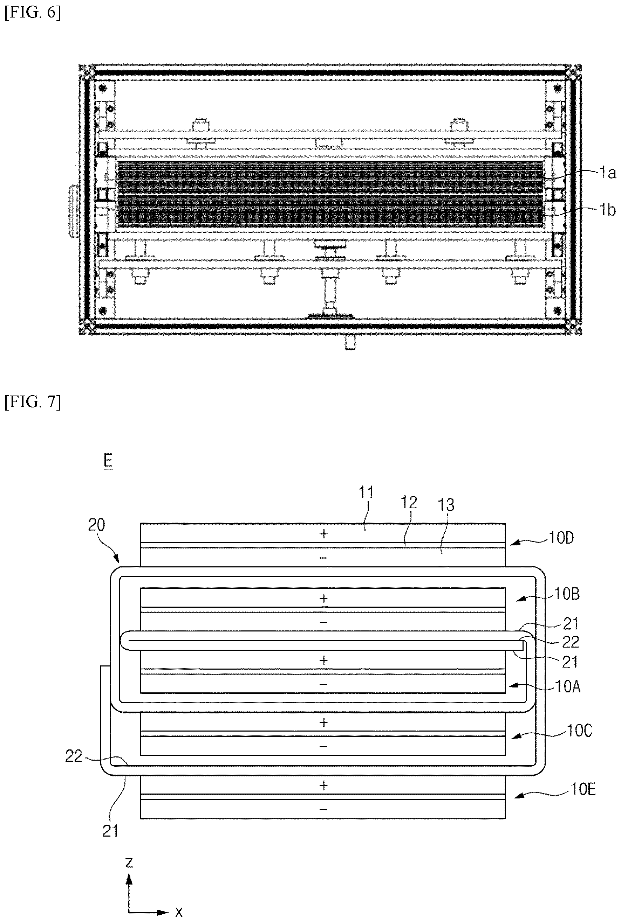

FIG. 7 is a side view of a stack-folding type electrode assembly to which the activation method of the present invention is applied. Referring to FIG. 7, the stack-folding type electrode assembly E according to an exemplary embodiment may have a structure in which a plurality of unit electrode assemblies 10 (10A to 10E) in which electrodes 11,13 and separators 12 are alternately stacked are folded one by one while being disposed on a first surface 21 of a separator sheet 20 for folding, such that a plurality of unit electrode assemblies 10 are stacked. Since the ends of the electrodes 11, 13 and the separator 12 constituting the stack-folding type electrode assembly E are wrapped by the separator sheet 20 for folding, the structure is unfavorable for gas discharge compared to the stack-type electrode assembly. Here, the stack-type electrode assembly may be an electrode assembly in which the electrodes and the separator are alternately stacked, but the separator sheet wrapped around them is excluded.

The following describes a lithium secondary battery to which the activation method of the present invention is applied.

The lithium secondary battery of the present invention may have an outer circumferential surface sealed by thermal fusion in a state where the electrode assembly is housed in a battery case including a resin layer and a metal layer.

The material of the positive electrode, negative electrode and separator included in the electrode assembly is not particularly limited, and any positive electrode, negative electrode and separator known in the art may be used without special limitation.

For example, the negative electrode may be formed by coating a negative electrode active material, such as a lithium metal, lithium alloy, carbon, petroleum coke, activated carbon, graphite, silicon compound, tin compound, titanium compound, or an alloy thereof, on a negative electrode current collector made of copper, nickel, aluminum, or an alloy containing at least one of these.

In addition, the positive electrode may be formed by coating a positive electrode active material, such as lithium manganese oxide, lithium cobalt oxide, lithium nickel oxide, lithium iron phosphate, or compounds and mixtures containing at least one of the foregoing, on a positive electrode current collector made of, for example, aluminum, nickel, copper, or an alloy containing at least one of the foregoing.

In addition, the electrode active material may be coated on both sides of the current collector, or the electrode active material may be coated on only one side of the current collector to form a non-coated part or the like. Furthermore, the thickness of the positive electrode and negative electrode is not particularly limited. That is, the thickness may be set in consideration of the purpose of use, such as power or energy, or ionic conductivity.

As a separator, conventional porous polymeric films conventionally used as separators, for example, porous polymeric films made of polyolefin-based polymers such as ethylene homopolymers, propylene homopolymers, ethylene/butene copolymers, ethylene/hexene copolymers, and ethylene/methacrylate copolymers, can be used, either alone or by stacking them. Alternatively, conventional porous nonwoven fabrics may be used, such as, but not limited to, nonwoven fabrics made of high melting point glass fibers, polyethylene terephthalate fibers, and the like. In addition to winding, which is a common method, lamination, stacking, and folding of the separator and the electrode are possible methods of applying the separator to the battery.

The electrolyte may include a lithium salt, which is an electrolyte, and an organic solvent.

The lithium salt may include, without limitation, those commonly used in electrolytes for lithium secondary batteries and can be expressed as Li⁺X⁻.

As an anion for these lithium salts, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used, but is not limited to this.

The organic solvents may include, without limitation, those commonly used in electrolytes for lithium secondary batteries, such as one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran, or mixtures of two or more of these.

The following describes in more detail an activation method of a lithium secondary battery according to an exemplary embodiment of the present invention.

### (a) Preparing a preliminary lithium secondary battery

(a) Preparing a preliminary lithium secondary battery may be a process of manufacturing a preliminary lithium secondary battery by accommodating an electrode assembly including a positive electrode, a negative electrode, and a separator together with an electrolyte in a battery case. The preliminary lithium secondary battery prepared by the preparation process may have an outer peripheral surface of the electrode assembly receptacle sealed by thermal fusion in a state where the electrode assembly is housed in a battery case including a resin layer and a metal layer.

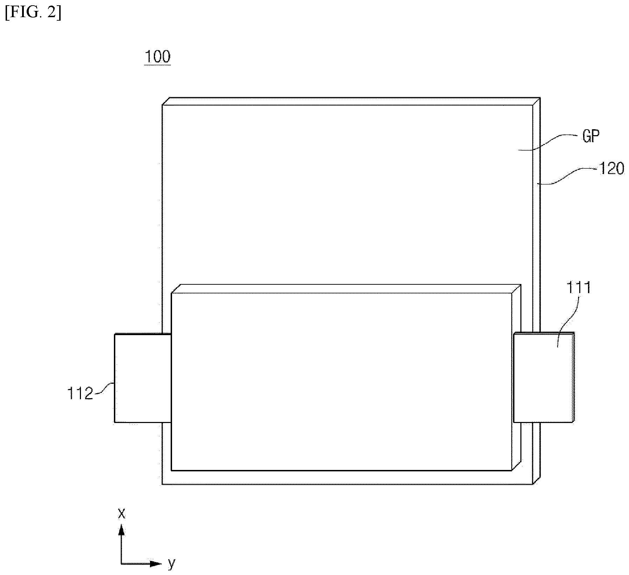

Specifically, the preliminary lithium secondary battery may include an electrode assembly (not shown), electrode tabs (not shown) provided on the electrode assembly, electrode leads 111,112 coupled to the electrode tabs, and a battery case 120 accommodating the electrode assembly, as shown in FIG. 2.

The electrode assembly has a structure in which a positive electrode and a negative electrode are stacked sequentially with a separator interposed, and may be made in a stack-type or a stack-folding type structure. The electrode tab includes a positive electrode tab provided on the positive electrode and a negative electrode tab provided on the negative electrode of the electrode assembly, wherein the electrode lead may include a positive electrode lead 111 coupled to the positive electrode and a negative electrode lead 112 coupled to the negative electrode tab.

Here, the electrode tab and the electrode lead are coupled by welding and are electrically connected, and the electrode lead 111, 112 is partially exposed by being withdrawn to the outside of the battery case 120. In addition, an insulating film (not shown) may be attached to a portion of the upper and lower surface of the electrode lead 111, 112 to ensure sealing and electrical insulation with the battery case.

The battery case 120 may include a case main body having a concave shaped storing part in which an electrode assembly may be settled, and a cover integrally connected to the case main body and sealing the storing part. That is, the battery case may be configured to accommodate an electrode assembly and an electrolyte in the storing part of the case main body, then seal the case main body and the edge of the cover, while bringing the case main body and the cover close together.

Meanwhile, the battery case 120 may have an aluminum laminate structure of a resin outer layer/barrier metal layer/thermally fusible resin sealant layer, according to which the resin sealant layers can be mutually fused by applying heat and pressure to the two side parts and the upper end part of the cover and the main body abutting each other, and a sealing surplus part may be formed.

Meanwhile, the upper end part is in direct contact with the same resin sealant layers of the upper and lower battery case, so that uniform sealing by melting is possible. On the other hand, since the electrode leads 111,112 protrude from the two sides, the battery case 120 can be thermally fused with an insulating film interposed between the battery case and the electrode lead 111,112 to improve sealing in consideration of the thickness of the electrode lead 111,112 and the heterogeneity to the battery case 120 material.

In one particular example, the (a) preparing of the preliminary lithium secondary battery may include a pre-aging process, wherein the preliminary lithium secondary battery is aged for 12 hours to 48 hours to impregnate the electrolyte into the electrode assembly.

After storing the electrode assembly and electrolyte in the battery case, the electrolyte must be sufficiently impregnated with the positive electrode, negative electrode, and separator constituting the electrode assembly in order for the electrode reaction to proceed by initial charging. If the initial charging process is performed while the electrolyte is not impregnated, uncharged areas may occur, resulting in uneven formation of the SEI film, which can lead to a decrease in battery performance.

Such a pre-aging process may include aging the lithium secondary battery at a temperature range of 18°C to 27°C, for a period of 12 hours to 48 hours, wherein the temperature range may be 18°C to 27°C, preferably 19°C to 26°C, and more preferably 20°C to 25°C. Furthermore, the duration of the pre-aging process may be from 12 hours to 48 hours, preferably from 18 hours to 36 hours.

In the pre-aging process, a high temperature pre-aging process can be included to improve the electrolyte impregnation efficiency. Such a high temperature pre-aging process may involve aging the preliminary lithium secondary battery at a temperature of 40°C to 55°C for 12 hours to 24 hours.

During the pre-aging process, this high temperature pre-aging process has the effect of improving the impregnation of the electrolyte, allowing the SEI film to form more uniformly during the initial charging process, and reducing the occurrence of uncharged areas, thereby avoiding the risk of lithium precipitation.

### (b) Initial charging process

The initial charging process according to an exemplary embodiment of the present invention may be a process of charging the preliminary lithium secondary battery prepared as described above until a predetermined voltage is reached.

Lithium secondary batteries are activated during manufacturing by performing an initial charging, during which lithium ions from the positive electrode migrate to the negative electrode and are inserted, forming a solid electrolyte interface (SEI) film on the negative electrode surface.

Once formed, the SEI film acts as an ion tunnel, allowing only lithium ions to pass through. The effect of this ion tunnel is to solvate the lithium ions, preventing larger molecular weight organic solvent molecules, such as lithium salts, EC, DMC, or DEC, that travel with the lithium ions in the electrolyte from co-inserting themselves into the graphite negative electrode and disrupting the structure of the negative electrode. Once the SEI film is formed, the lithium ions will not react with the graphite negative electrode or other materials again, and the amount of charge consumed in the formation of the SEI film has an irreversible capacity and does not react reversibly upon discharge. Therefore, no further decomposition of the electrolyte occurs and the amount of lithium ions in the electrolyte is reversibly maintained, so that a stable charge and discharge can be maintained.

In conclusion, once the SEI film is formed, the amount of lithium ions is reversibly maintained and the lifetime characteristics of the battery is improved.

During the activation process, the process in which the most gas is generated due to the reaction of the positive electrode, negative electrode, and electrolyte is the initial charging process, and the activation method according to the present invention performs the degassing process after the initial charging process, so it is desirable to induce maximum gas generation through the initial charging process.

In one specific example, during the initial charging process, the charge termination voltage may be set within a range of 30% (SOC 30%) to 80% (SOC 80%) of the lithium secondary battery capacity (SOC 100%), or may be set within a range of 40% (SOC 40%) to 80% (SOC 80%), or may be set within a range of 50% (SOC 50%) to 80% (SOC 80%), or may be set within a range of 60% (SOC 60%) to 80% (SOC 80%), or may be set within a range of 60% (SOC 60%) to 75% (SOC 75%). When the charge termination voltage is set within the above SOC range during the initial charging process, it is desirable to induce maximum gas generation during the initial charging process, while minimizing the collapse or instability of the SEI film formed through the initial charging process during degassing.

Specifically, when the positive electrode includes a lithium nickel cobalt manganese oxide (NCM) based positive electrode active material, the charge termination voltage may preferably be from 3.4 V to 4.1 V, and more preferably from 3.5 V to 4.0 V.

As for the charging conditions of the initial charging process, the charging may be performed according to conditions known in the art. Specifically, the charging method may perform charging in a constant current method until the charge termination voltage is reached. At this time, the charging rate (c-rate) may be 0.01C to 2C, 0.1C to 1.5C, 0.2C to 1C, or 0.2C to 1C, but is not necessarily limited thereto, and may be appropriately changed according to the positive electrode and negative electrode material properties.

Furthermore, the temperature condition of the initial charging process may be carried out at a temperature of 18°C to 28°C, more particularly at a temperature of 19°C to 27°C, more particularly at a temperature of 20°C to 26°C.

In an exemplary embodiment, the initial charging process may not include pressurizing the lithium secondary battery.

In the case of pouch-type batteries, the battery case may be flexible so that the initial charging process can be performed while the batteries are pressurized. For example, a pressurization jig configured for face pressurization can be used to initially charge the pouch-type battery while being pressurized, and such a pressurization process can prevent trapping of gases generated during the charging process.

However, cylindrical or prismatic batteries are not suitable for pressurizing the secondary battery during the initial charging process, because the battery case constituting the cylindrical or prismatic battery has a harder exterior than the battery case of the pouch-type battery, and pressurizing the battery case may cause damage to the battery. Therefore, the cylindrical battery or prismatic battery cannot perform a pressurization process during the initial charging process due to the characteristics of the battery, and because of this, the cylindrical battery or prismatic battery is more likely to trap gas generated during the initial charging process inside the electrode assembly compared to the pouch-type battery manufactured by performing the initial charging process while being pressurized. If the degassing process is performed between the initial charging process and the aging process according to the present invention, the internal gases can be effectively removed, so that the activation method according to the present invention can be useful for activating cylindrical or prismatic batteries.

### (c) Degassing process

The degassing process, according to an exemplary embodiment of the present invention, may include degassing and sealing the initially charged preliminary lithium secondary battery. The present invention performs the degassing process on the initially charged preliminary lithium secondary battery prior to performing an aging process. A significant amount of the gas generated during the series of activation processes is generated during the initial charging process, and if the high temperature aging process is performed without performing the degassing process, the electrodes and the separator are bonded, and the gas generated during the initial charging process may be trapped between them. To prevent this, the activation method according to the present invention performs the degassing process after the initial charging process and, more specifically, before the high temperature aging process.

In the activation method of the present invention, the degassing process is a process of discharging the gas generated during the activation process from the inside of the battery to the outside of the battery, and the internal gas can be sufficiently removed by performing degassing process only once during the activation process. In other words, it is not necessary to perform an additional degassing process after the aging process described below.

This degassing process may employ a variety of degassing techniques known in the art at the time of filing. For example, the degassing process may be performed by incising a portion of the gas pocket part (GP) of the preliminary lithium secondary battery shown in FIG. 2, discharging the gas inside the secondary battery through the incised portion to the outside of the secondary battery, and resealing the incised portion. However, these degassing techniques are well known to those skilled in the art and will not be described in more detail.

### (d) Aging process

The aging process, according to an exemplary embodiment of the present invention, may be a process of aging the preliminary lithium secondary battery to stabilize the SEI film formed through the initial charging process.

In one specific example, the aging process may include a (d-1) high temperature aging process, wherein the preliminary lithium secondary battery is aged at a temperature ranging from 50°C to 80°C, for a period of 10 hours to 40 hours. Performing the high temperature aging process has the effect of further accelerating the stabilization of the SEI film formed during the initial charging process.

The temperature range of the high temperature aging process may be from 50°C to 80°C, preferably from 55°C to 80°C, more preferably from 60°C to 75°C. Furthermore, the aging time of the high temperature aging process may be from 10 hours to 40 hours, from 12 hours to 36 hours, from 18 hours to 30 hours.

If the set temperature for high temperature aging is excessively high or the duration of the high temperature aging process is excessively long, the durability of the SEI film may be reduced, which is undesirable. Conversely, if the set temperature for high temperature aging is excessively low or the duration of the high temperature aging process is excessively short, the life characteristics of the lithium secondary battery may be reduced.

In one particular example, the aging process may further include a (d-2) room temperature aging process, wherein the preliminary lithium secondary battery is aged at a temperature range of 18°C to 27°C, for a period of 24 hours to 80 hours.

The temperature range of the room temperature aging process may be from 18°C to 27°C, preferably from 19°C to 26°C, more preferably from 20°C to 25°C. Furthermore, the aging time of the room temperature aging process may be from 24 hours to 80 hours, preferably from 30 hours to 72 hours, and more preferably from 16 hours to 60 hours.

If the room temperature aging process is performed outside of the above range, in an excessively low temperature range, or for an excessively short period of time, the preliminary lithium secondary battery may not be sufficiently activated, resulting in poor electrical performance. Conversely, if it is performed at excessively high temperatures or for an excessively long period of time, swelling may occur and the durability of the SEI film may be degraded.

Meanwhile, the order of the high temperature aging process and the room temperature aging process is not particularly limited, but performing the high temperature aging followed by the room temperature aging is more preferable in terms of stabilizing the SEI film.

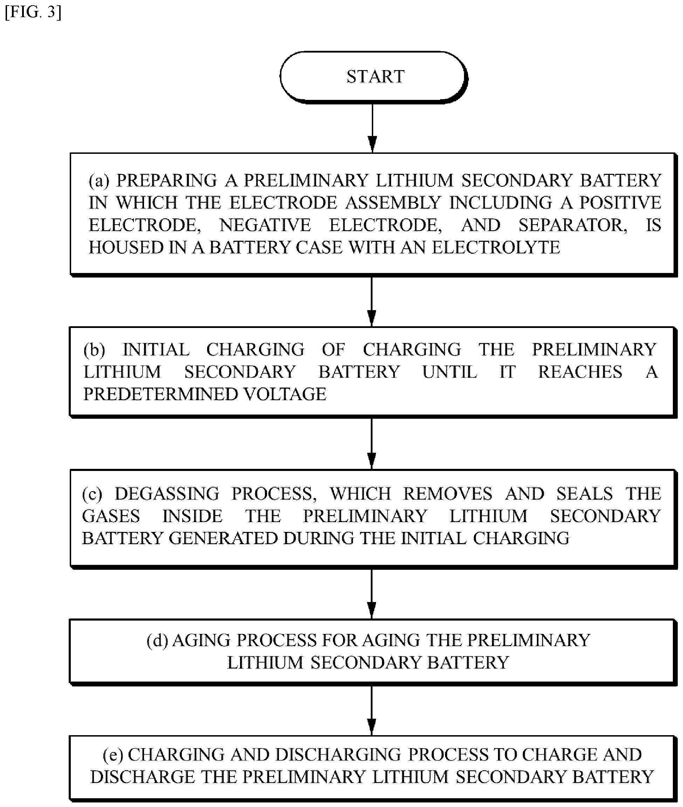

FIG. 3 is a flowchart of an activation method of a lithium secondary battery according to an exemplary embodiment of the present invention. Referring to FIG. 3, the activation method of a lithium secondary battery according to an exemplary embodiment of the present invention may further include, after the (d) aging process, (e) a charging and discharging process to charge and discharge the preliminary lithium secondary battery. In one specific example, the charging and discharging process may be a full discharge and full charge process in which the preliminary lithium secondary battery is fully discharged to around SOC 0, and the discharged secondary battery is then charged to at least 95% of its design capacity (SOC 95%), and the full discharge and full charge process may be performed once, or may be repeated two or more times.

In one particular example, the activation method of a secondary battery according to the present invention may further include an additional aging process after the (e) additional charging and discharging process. The additional aging process, which is a process of stabilizing the secondary battery, may be performed at room temperature or at high temperatures, and may be specifically performed for a period of 1 to 21 days. The additional aging process may include a monitoring (OCV tracking) process including measuring the open circuit voltage (OCV) of the battery at regular temporal intervals to screen for low-voltage defective batteries where a voltage drop occurs to a range exceeding the self-discharge of the battery.

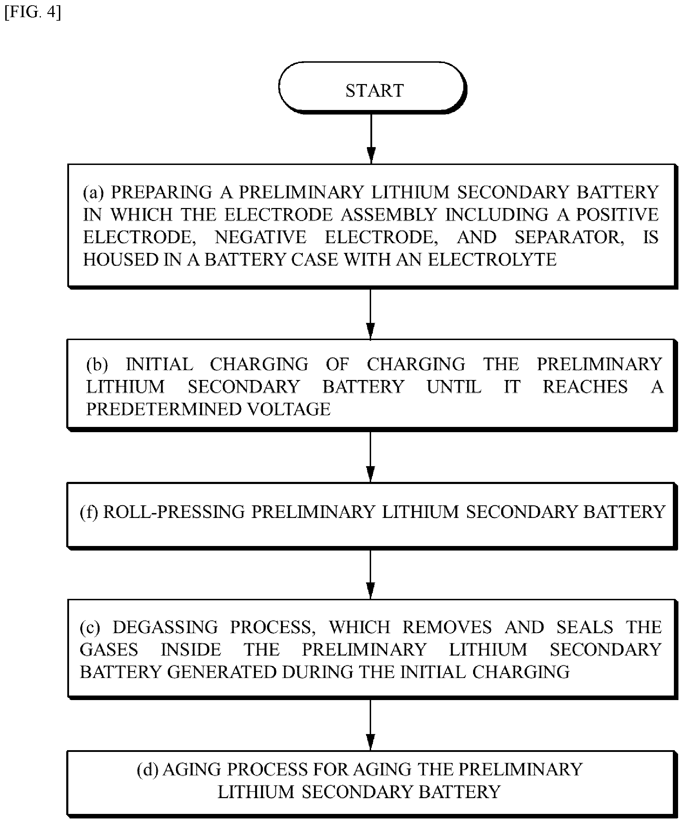

FIG. 4 is a flowchart of an activation method of a lithium secondary battery according to another exemplary embodiment of the present invention. Referring to FIG. 4, the activation method of a lithium secondary battery according to another exemplary embodiment of the present invention may further include, after the initial charging process, (f) roll-pressing the preliminary lithium secondary battery.

During the activation process of a lithium secondary battery, (b) the initial charging process generates the most gas, and if the roll-pressing process is performed after the initial charging process, the gas present at the interface, such as between the electrodes and the separator of the electrode assembly, can be removed by physical force. In addition, since the roll-pressing may pressurize the battery from one side to the other with directionality, internal gases that may be present in the electrode assembly can be pushed along the direction of the roll-pressing and moved to the outside of the electrode assembly. The outside of the electrode assembly may be the gap space between the electrode assembly and the battery case.

Therefore, the roll-pressing process can minimize the trapping of gases generated during the initial charging process inside the electrode assembly and has the effect of allowing as much of the gas inside the secondary battery to be discharged as possible.

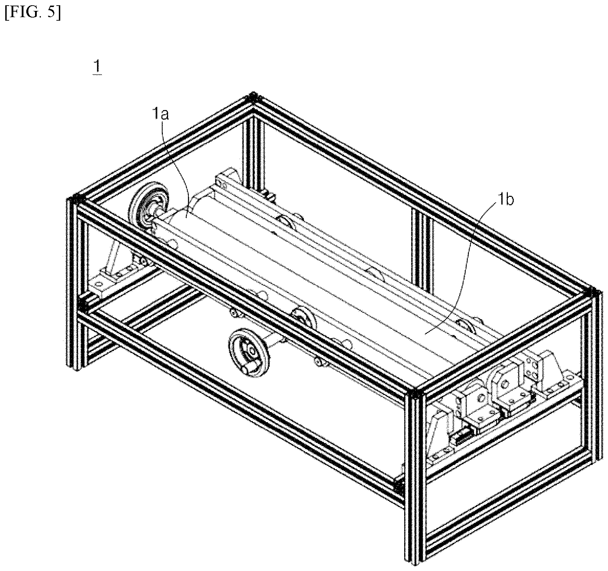

FIGS. 5 and 6 illustrate an exemplary embodiment of a pressurizing roller for performing the roll-pressing process. Referring to these figures, the roll-pressing process of the present invention may be pressurizing the battery by passing a preliminary lithium secondary battery 100 between opposing upper pressurizing roller 1a and lower pressurizing roller 1b.

Roll-pressing by such pressurizing rollers can induce a linear pressure on the preliminary lithium secondary battery, and the roll-pressing process according to one particular example can pressurize the preliminary lithium secondary battery with a linear pressure of from 1 kgf/mm to 10 kgf/mm, preferably from 2 kgf/mm to 9 kgf/mm, more preferably from 2.5 kgf/mm to 7.5 kgf/mm.

The roll-pressing process may be performed once, or may be performed two to five times. The number of roll-pressing cycles may be suitably determined by the thickness of the lithium secondary battery, the material properties of the battery, and the like.

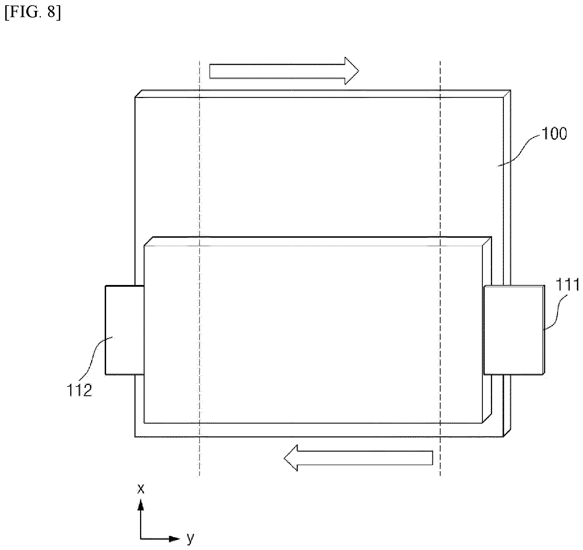

FIG. 8 is a diagram schematically illustrating a roll-pressing process of the present invention. Referring to FIG. 8, in an exemplary embodiment, the direction of the roll-pressing may be in a direction parallel to a first direction (y-axis direction), which is the withdrawal direction of the electrode lead 111,112. However, it is not limited to this, but it is also possible to roll-press in a direction parallel to a second direction (x-axis direction) orthogonal to the withdrawal direction of the electrode lead 111,112, to roll-press in a direction parallel to the first direction, or to roll-press in a direction parallel to the second direction.

In the case of roll-pressing in a direction parallel to the first direction, in order to increase the effectiveness of gas removal, roll-pressing may be performed first from one side of the first direction toward the other side, and then from the other side of the first direction toward the one side, as shown in FIG. 8.

Meanwhile, when a stack-folding type electrode assembly is stored inside the preliminary lithium battery, it is preferable to roll-press the preliminary lithium battery in a direction parallel to the first direction, which is the withdrawal direction of the electrode lead.

Referring to FIGS. 7 and 8, the separator sheet 20 for folding, which constitutes the stack-folding type electrode assembly E, wraps around the unit electrode assemblies 10A to 10E, but not around the corner end from which the electrode leads are withdrawn. That is, the electrode leads are withdrawn along the first direction (y-axis direction), and the separator sheet 20 for folding wraps around the electrode face along the second direction (x-axis direction). If the direction of the roll-pressing is in a direction parallel to the second direction, internal gas may collect in the surplus space between the end of the electrode assembly and the folding portion of the separator sheet 20 for folding. Therefore, in order to prevent gas generated during the initial charging process from collecting in the folding portion of the separator sheet 20 for folding, the direction of the roll-pressing is preferably parallel to the withdrawal direction of the electrode leads.

The roll-pressing process can be performed at any stage after the initial charging process, preferably before the degassing process. This is because the degassing process is performed while the gases inside the electrode assembly are pushed to the outside of the electrode assembly through the roll-pressing process, allowing the gases inside the battery to be maximally discharged to the outside of the battery.

When applied to a lithium secondary battery where jig pressurization cannot be performed during initial charging due to the specifications of the battery, or when applied to a lithium secondary battery including a stack-folding type electrode assembly, the activation method and the manufacturing method of lithium secondary battery of the present invention have excellent gas discharging effect, as the internal gas is removed immediately after the initial charging process, which is the most gas-generating part of the activation process, without degrading the capacity and life characteristics compared to the conventional activation method, while minimizing the risk of lithium precipitation.

Hereinafter, the present invention will be described in more detail by way of examples. However, it is to be understood that the configurations described in the embodiments described herein are only one embodiment of the invention and do not represent all of the technical ideas of the invention, and that there may be various equivalents and modifications that may be substituted for them at the time of filing.

### Manufacturing Example 1: Manufacturing preliminary lithium secondary battery including stack-folding type electrode assembly

95.9 parts by weight of LiNi_{0.8}Co_{0.1}Mn_{0.1}O₂ as a positive electrode active material, 1.6 parts by weight of PVdF as a binder, and 2.5 parts by weight of carbon black as a conductive material were weighed and mixed in N-methylpyrrolidone (NMP) solvent to manufacture a slurry for the positive electrode composite layer. The slurry for the composite layer was applied to an aluminum foil, dried, and rolled to form a positive electrode having a positive electrode composite layer (average thickness: 130 µm).

85 parts by weight of natural graphite as a carbon-based active material, 5 parts by weight of silicon oxide (SiO) as a silicon-based active material, 6 parts by weight of carbon black as a conductive material, and 4 parts by weight of PVDF as a binder were mixed in N-methylpyrrolidone solvent to manufacture a slurry for the negative electrode composite layer, which was then applied to a copper foil to prepare a negative electrode having a negative electrode composite layer (average thickness: 180 µm).

A stack-folding type electrode assembly was manufactured by interposing a separator consisting of a porous polyethylene (PE) film (thickness: approx. 16 µm) between each manufactured positive electrode and negative electrode. After placing the electrode assembly inside a pouch-type battery case made of an aluminum laminated sheet, an electrolyte was injected into the case and left for 3 days at room temperature to be sufficiently impregnated with the electrolyte (pre-aging) to manufacture a preliminary lithium secondary battery. The electrolyte was completed by injecting an electrolyte containing 1 M LiPF₆ to an organic solvent composed of ethylene carbonate (EC) and ethyl methyl carbonate (EMC) in a composition of 3:7 (volume ratio).

### Example 1

The preliminary lithium secondary battery of the manufacturing example was prepared, initially charged to a SOC of 30%, and then a portion of the pouch-type battery case was opened to allow gas inside the battery to discharge to the outside of the battery, and the opened portion was resealed to perform a degassing process. The batteries were then subjected to high temperature aging at 60°C for 24 hours and room temperature aging at 23°C for 72 hours, followed by a primary discharge to SOC 0. The activation process was completed by repeating charging to SOC 100 and discharging to SOC 0 twice more.

### Example 2

The preliminary lithium secondary battery of the manufacturing example was prepared and initially charged to 30% SOC, and then the preliminary lithium secondary battery was roll-pressed at a linear pressure of 3 kgf/mm using the pressurizing roller shown in FIG. 5. Then, a portion of the pouch-type battery case was opened to discharge the gas inside the battery to the outside of the battery, and the opened portion was resealed to perform the degassing process. The batteries were then subjected to high temperature aging at 60°C for 24 hours and room temperature aging at 23°C for 72 hours, followed by a primary discharge to SOC 0. Then, the activation process was completed by repeating charging to SOC 100 and discharging to SOC 0 twice more.

### Example 3

The activation process was performed in the same way as in Example 1 above, except that the charge termination voltage was set to SOC 60% for the initial charging.

### Comparative Example

The preliminary lithium secondary battery of the manufacturing example was prepared and subjected to an initial charging to SOC 30%, followed by high temperature aging at a temperature of 60°C for 24 hours and room temperature aging at a temperature of 23°C for 72 hours. A portion of the pouch cell case was then opened to perform a degassing process to remove gases from the battery by discharging them to the outside of the battery, reseal the battery, and perform a primary discharge to SOC 0. Then, the activation process was completed by repeating charging to SOC 100 and discharging to SOC 0 twice more.

### Experimental Example 1: Evaluating room temperature cycling characteristics

Each of the lithium secondary batteries manufactured in the Examples and Comparative Example was charged to 4.35 V at a 0.8 C-rate, subjected to a constant current/constant voltage charge with a 0.05 C cut off, and discharged to 3.0 V at a rate of 0.5 C under temperature conditions of 25°C. This was set as one cycle, and 100 cycles were repeated. From the measured discharge capacity, the capacity retention rate was calculated using the following equation, and the results are shown in Table 1. Capacity Retention Rate (%) = (Discharge capacity for 100 cycles) × 100/(Discharge capacity of the first cycle)

### Experimental Example 2: Observing for lithium precipitation

Each of the lithium secondary batteries manufactured in the Examples and Comparative Example was charged to 4.35V at a 0.8C-rate, subjected to a constant current/constant voltage charge with a 0.05C cut off, and discharged to 3.0V at a rate of 0.5C. This was set as one cycle, and 300 cycles were repeated. The batteries were then disassembled and observed for lithium precipitation and the results are shown in Table 1.

### Experimental Example 3: Evaluating gas generation amount

Each of the lithium secondary batteries manufactured in the Examples and Comparative Example was charged to 4.35V at a 0.8C-rate under a temperature condition of 25°C, followed by a constant current/constant voltage charge with a 0.05C cut off, and then discharged to 3.0V at a rate of 0.5C. This was set as one cycle, and 10 cycles were repeated, and the amount of gas generated after discharge was measured, and the results are shown in Table 1. In Table 1 below, the relative gas generation figures are shown when the gas generated in Example 1 is taken as 100.

**[Table 1]**

| | Whether lithium precipitated | Capacity Retention Rate (%) | Gas generation amount (%) |
|---|---|---|---|
| Example 1 | X | 90 | 100 |
| Example 2 | X | 92 | 95 |
| Example 3 | X | 93 | 95 |
| Comparative Example | O | 88 | 103 |

Referring to Table 1, it can be seen that the lithium secondary battery manufactured according to the examples of the present invention, compared to the lithium secondary battery of the comparative example, has no observed lithium precipitation, better capacity retention rate, and less gas generation.

Thus, it can be seen that in a lithium secondary battery including a stack-folding type electrode assembly, the activation method of performing a degassing process after an initial charging has a more favorable effect on gas discharge than the activation method of performing a degassing process after an aging process.

### [Reference numerals]

100: LITHIUM SECONDARY BATTERY
111, 112: ELECTRODE LEAD
120: BATTERY CASE
GP: GAS POCKET PART
1: PRESSURIZING ROLLER
1a: UPPER PRESSURIZING ROLLER, 1b: LOWER PRESSURIZING ROLLER
E: STACK-FOLDING TYPE ELECTRODE ASSEMBLY
10A TO 10E: UNIT ELECTRODE ASSEMBLIES
11: POSITIVE ELECTRODE
12: SEPARATOR
14: SEPARATOR
20: SEPARATOR SHEET FOR FOLDING

## Claims

1. An activation method of a lithium secondary battery, wherein steps (a) to (d) are performed sequentially:
(a) preparing a preliminary lithium secondary battery in which the electrode assembly including a positive electrode, negative electrode, and separator, is housed in a battery case with an electrolyte;
(b) initial charging of charging the preliminary lithium secondary battery until it reaches a predetermined voltage;
(c) degassing process, which removes the gases inside the preliminary lithium secondary battery generated during the initial charging and seals; and
(d) aging process for aging the preliminary lithium secondary battery.

2. The activation method of a lithium secondary battery of claim 1, wherein the electrode assembly is a stack-folding type electrode assembly.

3. The activation method of a lithium secondary battery of claim 2, wherein
the stack-folding type electrode assembly has a structure in which a plurality of unit electrode assemblies are stacked, where a plurality of unit electrode assemblies having electrodes and separators alternately stacked thereon are folded one by one in a state of being disposed on a first surface of a separator sheet for folding.

4. The activation method of a lithium secondary battery of claim 1, wherein the initial charging does not comprise pressurizing the lithium secondary battery.

5. The activation method of a lithium secondary battery of claim 1, wherein the charge termination voltage of the initial charging is set within a range of 30% to 80% (SOC 30% to SOC 80%) of the design capacity of the secondary battery.

6. The activation method of a lithium secondary battery of claim 1, wherein the charge termination voltage of the initial charging is set within a range of 60% to 80% (SOC 60% to SOC 80%) of the design capacity of the secondary battery.

7. The activation method of a lithium secondary battery of claim 1, wherein the aging process comprises:
(d-1) high temperature aging process of aging a preliminary lithium secondary battery at a temperature range of 50°C to 80°C, for a period of 10 hours to 40 hours.

8. The activation method of a lithium secondary battery of claim 7, wherein the aging process further comprises:
(d-2) room temperature aging process of aging the preliminary lithium secondary battery at a temperature range of 18°C to 27°C, for a period of 24 hours to 80 hours.

9. The activation method of a lithium secondary battery of claim 1, further comprising:
(e) charging and discharging process to charge and discharge the preliminary lithium secondary battery after the aging process.

10. The activation method of a lithium secondary battery of claim 1, further comprising: (f) roll-pressing the preliminary lithium secondary battery after the initial charging.

11. The activation method of a lithium secondary battery of claim 10, wherein during the roll-pressing process, the preliminary lithium secondary battery is roll-pressed at a linear pressure of 1 kgf/mm to 10 kgf/mm.

12. The activation method of a lithium secondary battery of claim 10, wherein the roll-pressing process is performed prior to the degassing process.

13. The activation method of a lithium secondary battery of claim 10, wherein in the roll-pressing process, the preliminary lithium secondary battery is roll-pressed in a direction parallel to the first direction, which is the withdrawal direction of an electrode lead.

14. The activation method of a lithium secondary battery of claim 1, wherein the degassing process is performed once.

15. The activation method of a lithium secondary battery of claim 1, wherein the preparing of preliminary lithium secondary battery comprises a pre-aging process of aging the preliminary lithium secondary battery for 12 hours to 48 hours to impregnate an electrolyte in the electrode assembly.
